# FASCICULE DE BREVET EUROPEEN

(11) **EP 1 512 071 B1**
(45) Date de publication et mention de la délivrance du brevet: **07.11.2007**
(21) Numéro de dépôt: 03735717.5
(22) Date de dépôt: 23.05.2003
(51) Int. Cl.: G06F 9/445

(54) **PROCEDE DE VERIFICATION DE CODES POUR MICROCIRCUITS A RESSOURCES LIMITEES**
VERFAHREN ZUM PRÜFEN VON CODES FÜR MIKROSCHALTUNGEN MIT EINGESCHRÄNKTEN RESSOURCEN
CODE VERIFICATION METHOD FOR LIMITED RESOURCE MICROCIRCUITS

(30) Priorité: 27.05.2002 FR 0206445
(43) Date de publication de la demande: 09.03.2005
(73) Titulaire: GEMPLUS, 13420 Gémenos (FR)
(72) Inventeur: GREZES, Jean-François, 13009 Marseille (FR); BENOIT, Alexandre, 13009 Marseille (FR)
(86) Numéro de dépôt international: PCT/EP2003/050193
(87) Numéro de publication internationale: WO 2003/100607

(56) Documents cités:
- FR-A- 2 797 963
- LEROY X: "BYTECODE VERIFICATION ON JAVA SMART CARDS" SOFTWARE PRACTICE & EXPERIENCE, JOHN WILEY & SONS LTD. CHICHESTER, GB, vol. 32, no. 4, 10 avril 2002 (2002-04-10), pages 319-340, XP001081545 ISSN: 0038-0644

## Description

La présente invention concerne un procédé de vérification de codes utilisés avec des microcircuits à ressources limitées, tels que utilisés dans des cartes à puce, notamment pour vérifier l'intégrité et assurer l'innocuité du code.

Les cartes à microcircuit électronique, dites cartes à puce, sont utilisées comme support informatique mobile pour des applications très diverses et exigeant pour la plupart d'entre elles un haut niveau de sécurité, notamment les opérations bancaires, les paiements sécurisés, l'accès aux bâtiments ou à des zones sécurisées et les télécommunications. L'utilisation répandue des cartes à puce et la diversité de leurs applications tendent actuellement à l'utilisation de plateformes ouvertes, telle la plateforme connue sous le nom de "Java", qui permet le chargement, dans la mémoire d'une machine de traitement de données électroniques, d'applications compatibles avec la plateforme. Une plateforme tel que Java présente deux avantages, la standardisation du code intermédiaire, dit "bytecode", et son indépendance par rapport à la machine. Tout programme Java peut donc être compilé en une série d'instructions bytecode universellement comprises par toute machine basée sur une telle plateforme.

Etant donné que les cartes à puce ou d'autres systèmes embarqués sont mobiles et qu'elles sont utilisées en relation avec des systèmes informatiques étrangers, ou qu'elles exécutent un bytecode d'origine soit inconnue, soit non-sécurisée, il est nécessaire de vérifier l'intégrité et l'innocuité du programme utilisé avec la carte ou avec d' autres systèmes embarqués.

Un programme de vérification de code intermédiaire de type Java est décrit dans le brevet US 5,740,441. Le procédé de vérification décrit dans ce brevet est adapté aux systèmes informatiques tels que des ordinateurs PC dont la puissance de calcul de leur processeur et la capacité de leur mémoire vive RAM (Random Access Memory) sont nettement supérieures à celles d'une carte à puce. La puissance d'un processeur et la capacité de la mémoire vive ou de la mémoire persistante ROM (Read Only Memory) sont fonction de la surface de silicium encarté. Les cartes à puce devant d'une part respecter des contraintes mécaniques, en particulier la torsion et la flexion, et d'autre part garantir une durée de vie raisonnable, leur surface de silicium ne dépasse généralement pas 25 mm². La mémoire d'une carte à puce a typiquement une capacité d'environ 8 kilo-octets, par conséquent bien inférieure à la capacité de RAM dont dispose l'ordinateur PC le moins performant proposé actuellement sur le marché.

Il existe plusieurs solutions permettant de vérifier le bytecode dans des dispositifs dont la capacité de mémoire est très limitée.

L'une de ces approches consiste à ajouter au code le résultat d'un algorithme de pré-calcul qui sera ensuite repris par le vérifieur du bytecode. Il peut s'agir par exemple de la méthode PCC (Proof Carrying Code) ou d'une variante de cette dernière qui permet au vérifieur encarté d'utiliser des algorithmes plus simples. Un programme, tel qu'un applet Java quelconque, ne comprennent pas le code supplémentaire PCC, ne pourra donc pas être vérifié par le microcircuit. La sphère d'utilisation des microcircuits utilisant ces méthodes est donc limitée.

Une autre approche consiste à modifier le code intermédiaire du programme à vérifier à l'extérieur du dispositif de telle sorte que le procédé de vérification soit plus aisé sans entraîner pour autant une diminution de fiabilité, telle que décrite dans la demande de brevet internationale WO 0114958 A2. Dans cette demande, on décrit un procédé de vérification d'un programme de type Java dans lequel l'on modifie le code intermédiaire par un procédé dit "de normalisation" dans un système de traitement de données externe avant de transférer ce code modifié dans un système embarqué. Lors de cette normalisation, le registre réel des types est réalloué à un registre virtuel, chaque case de ce registre ne définissant qu'un type, c'est-à-dire que le registre virtuel est monomorphe. Cette modification permet donc de réduire fortement la consommation en mémoire nécessaire pour stocker les différents types d'un registre polymorphe lors du procédé de vérification. Si le procédé de vérification de ce code modifié se termine avec succès, le code modifié est ensuite exécuté par le système embarqué. L'un des désavantages de ce procédé est que l'on ne peut pas être absolument sûr que le code modifié dans le système externe correspond au code original et sera exécuté correctement par le système embarqué. D'autre part, le fait d'exécuter un code modifié selon le procédé décrit dans la demande de brevet précitée, limite l'utilisation de certaines techniques d'optimisation de calcul du programme.

Il est connu, par ailleurs, le document « Leroy X - Bytecode verification on java smart cards - Software practice & experience, John Wiley & Sons LTD. Chichester, GB, vol. 32, no. 4, 10 avril 2002 - XP-001081545 ISSN : 0038-0644) » qui divulgue un procédé de vérification de code intermédiaire comprenant une étape de transformation du code avant chargement qui permet de simplifier la vérification ultérieure du code qui est effectuée à bord de la carte selon un algorithme économe en ressource en RAM . Cet algorithme présuppose que chaque registre a un type unique pour l'ensemble du code d'une méthode.

De manière générale, les procédés conventionnels de vérification du code intermédiaire (bytecode) Java destinés à être utilisés dans des microcircuits à ressources limitées peuvent également avoir les inconvénients d'augmenter la quantité d'informations à transmettre au microcircuit, de nécessiter l'implémentation et l'exécution d'un logiciel relativement complexe dans le système informatique externe en communication avec la carte à puce, ou de limiter l'utilisation de certaines techniques d'optimisation de calcul du programme.

Tenant compte de ce qui précède, l'un des objectifs de l'invention est de fournir un procédé de vérification de code intermédiaire destiné à être exécuté dans un objet à microcircuit à ressources limitées, fiable et économe en termes d'occupation des ressources de mémoire du microcircuit, notamment la mémoire volatile ou d'autres mémoires accessibles en écriture et lecture du microcircuit.

Il est avantageux de fournir un procédé de vérification destiné à être exécuté dans un objet à microcircuit à ressources limitées qui ne compromet pas l'exécution du code intermédiaire et qui ne limite pas l'utilisation des techniques d'optimisation de calcul du code intermédiaire.

Il est avantageux de fournir un procédé de vérification destiné à être exécuté dans un objet à microcircuit à ressources limitées, ayant un large spectre d'utilisation pour une plateforme donné, tel que le Java ou des variantes telles que le Javacard.

Il est en outre avantageux de réduire l'utilisation des ressources de calculs du microcircuit de l'objet.

Il est également avantageux de réduire le temps nécessaire pour effectuer la vérification d'un programme à vérifier.

Des buts de l'invention sont réalisés par un procédé selon la revendication 1.

Dans la présente invention, un procédé de vérification de codes intermédiaires exécutable par un microcircuit à ressources limitées connecté à un système de traitement de données externe, comporte une étape de modification du code intermédiaire comprenant la réallocation de registres réels de types à des registres virtuels de types monomorphes, et de construction d'un code réalloué dont les instructions font référence aux registres virtuels, et une étape de vérification du code réalloué dans le microcircuit à ressources limitées, caractérisée en ce que, en cas de succès de la vérification du code réalloué dans le microcircuit, l'on installe le code intermédiaire original dans le microcircuit à ressources limitées pour exécution.

Dans une première forme d'exécution, la modification du code intermédiaire original peut être effectuée dans un système de traitement de données externe avant son chargement dans le microcircuit à ressources limitées, la modification comprenant la génération d'un composant de réallocation incluant un tableau de réallocation définissant la réallocation des données du type d'un registre réel à des données du type d'un registre virtuel monomorphe. Dans cette forme d'exécution, le procédé de vérification comprend la vérification du composant de réallocation et, en cas de succès, la vérification du code réalloué, le code réalloué étant construit soit lors du procédé de vérification du composant de réallocation, soit après vérification du composant de réallocation. Si la vérification du code réalloué se termine avec succès, le bytecode original est installé pour exécution, le bytecode original étant soit stocké dans une mémoire persistante accessible en lecture et en écriture du microcircuit, soit chargé depuis le système externe. Dans ce dernier cas, afin d'assurer que le bytecode original installé depuis le système externe correspond au code original qui a été vérifié lors du premier chargement du bytecode original, un calcul de hachage du code intermédiaire original est effectué et comparé avec le résultat du calcul de hachage du code intermédiaire original à réinstaller après le procédé de vérification.

Dans une autre forme d'exécution, les étapes de calcul de la réallocation et de la construction du code réalloué peuvent être effectuées dans le microcircuit à ressources limitées, le code intermédiaire original étant chargé dans le microcircuit avant l'exécution du procédé de vérification et stocké dans une mémoire du microcircuit, par exemple dans une mémoire persistante accessible en lecture et en écriture, du type EEPROM (Electrical Erasable Programmable Read Only Memory).

Avantageusement, la génération d'un code réalloué pour vérification permet de générer un registre du type monomorphe réduisant la consommation de la mémoire volatile du microcircuit lors de la vérification du code intermédiaire. L'installation du code intermédiaire original pour exécution, après le procédé de vérification, permet toutefois d'éviter des problèmes éventuels liés à l'exécution d'un code intermédiaire modifié et permet également l'utilisation de techniques de calcul optimisées.

D'autres caractéristiques avantageuses de l'invention ressortiront des revendications, de la description détaillée de formes d'exécution de l'invention donnée ci-après et des dessins annexés, dans lesquels:
la Fig. 1 montre un organigramme illustrant l'enchaînement des étapes d'un procédé de vérification d'un code intermédiaire selon une première forme d'exécution de l'invention;
la Fig. 2 est une représentation simplifiée d'instructions du code intermédiaire (bytecode) et d'un tableau de réallocation associé aux instructions du code intermédiaire;
la Fig. 3 est une représentation simplifiée d'un exemple de code intermédiaire avec son tableau de réallocation selon une forme d'exécution de l'invention;
la Fig. 4 montre un organigramme illustrant l'enchaînement des étapes pendant le procédé de vérification du tableau de réallocation;
la Fig. 5 est une représentation simplifiée de l'affectation et de la mise à jour du tableau de réallocation courante pour une instruction du code intermédiaire et du type *"def r",* qui est une instruction définissant une valeur dans le registre réel associé à l'instruction;
la Fig. 6 est une représentation simplifiée de l'affectation et de la mise à jour du tableau de réallocation courante pour une instruction du type "*use* r", qui est une instruction utilisant une valeur r dans un registre associé à l'instruction courante;
la Fig. 7 est une représentation simplifiée de l'affectation et de la mise à jour du tableau de réallocation courante pour une instruction du code intermédiaire du type *"brch",* qui est une instruction de branchement à au moins deux instructions;
la Fig. 8 est une représentation simplifiée de l'affectation et de la mise à jour du tableau de réallocation courante pour une instruction du type *"nop",* qui est une instruction qui ne comporte pas d'opération sur le registre associé à l'instruction courante;
la Fig. 9 est une représentation simplifiée de l'affectation et de la mise à jour du tableau de réallocation courante pour une instruction du type *"return";*
la Fig. 10 montre un organigramme illustrant l'enchaînement des étapes dans un procédé de vérification de code intermédiaire selon une deuxième forme d'exécution de l'invention.

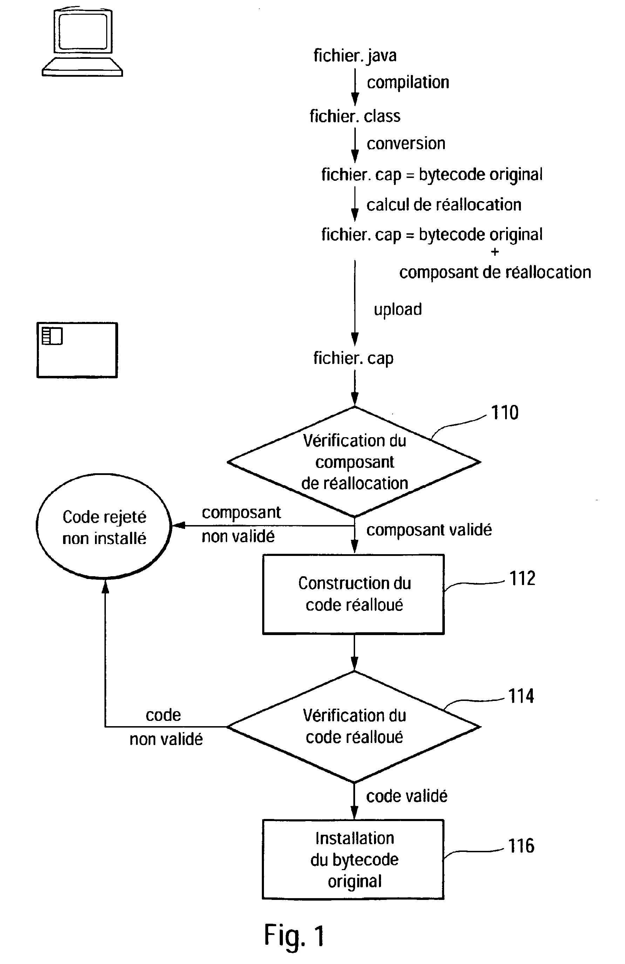

Faisant référence à la Fig. 1, les étapes d'un procédé de vérification d'un code intermédiaire, tel qu'un bytecode Java ou Javacard, selon une première forme d'exécution de l'invention, sont montrées. Un microcircuit à ressources limitées notamment pour un système embarqué tel qu'une carte à puce, est connecté à un système de traitement de données externe (ci-après "système externe") pour le chargement et l'exécution d'un programme tel qu'un applet Java, ou Javacard, dans le microcircuit. Le système externe effectue la compilation et la conversion du programme Java en un fichier *.cap*, c'est-à-dire le code intermédiaire (bytecode) exécutable par le microcircuit.

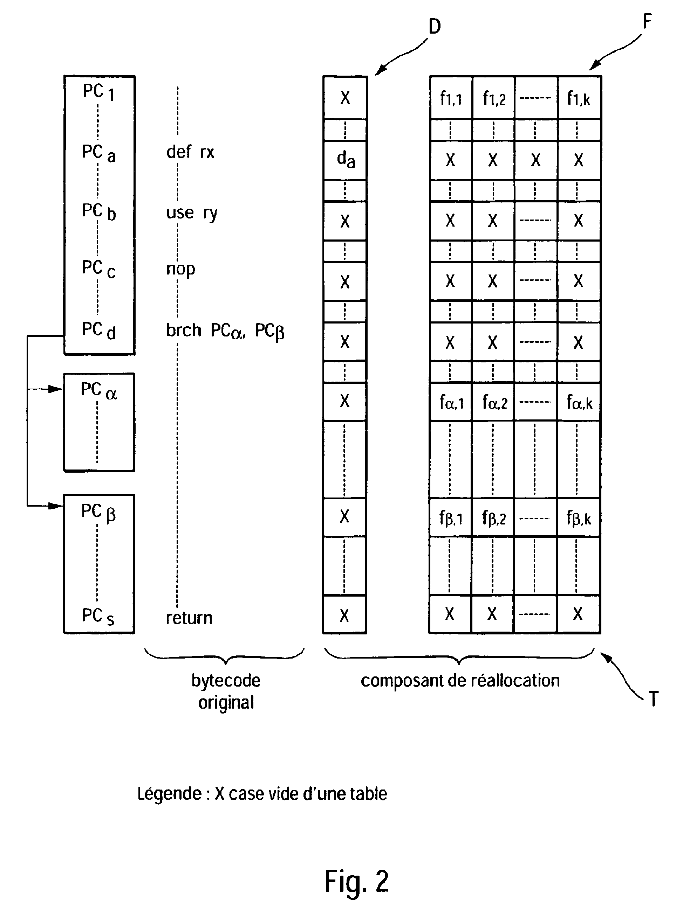

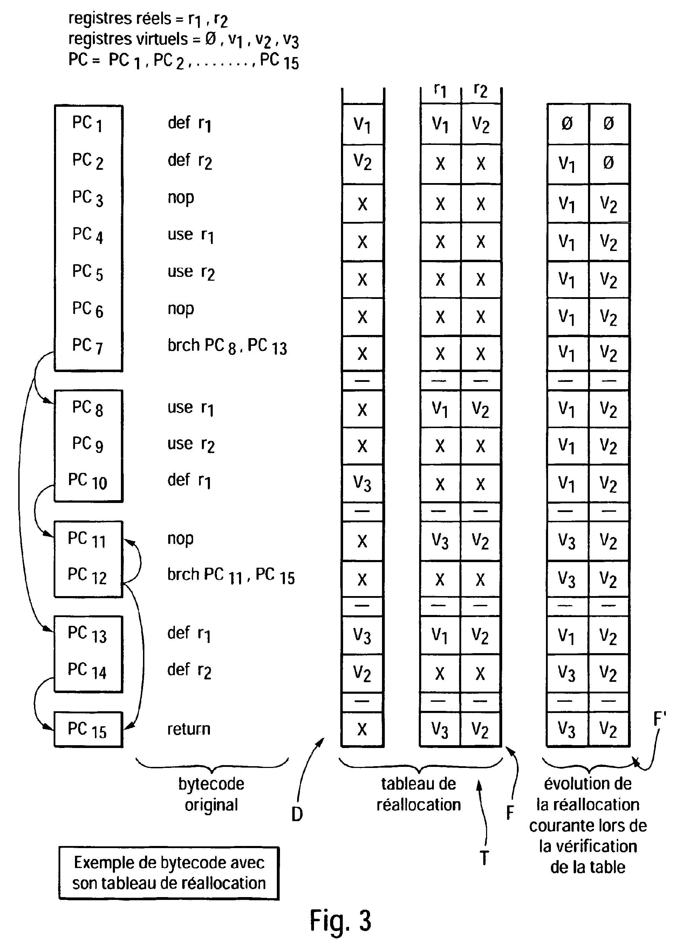

Dans cette première forme d'exécution, l'on ajoute au code intermédiaire original un composant de réallocation comprenant un tableau de réallocation T, tel que montré dans les Figures 2 et 3. Ce composant de réallocation est généré par le système externe par une méthode du calcul de réallocation connue, telle que la méthode de "coloration de graph".

Le calcul de réallocation par coloration de graph est bien connu en tant que tel et est utilisé par exemple dans le procédé de vérification décrit dans la demande internationale WO 0114958 A2. Toutefois, dans la demande précitée, le code intermédiaire original est modifié par un procédé dit de "normalisation", Ainsi, d'une part, les instructions du code intermédiaire et le registre sont modifiés, de sorte que le registre est monomorphe, c'est-à-dire que chaque registre ne reçoit des données représentant un seul type et, d'autre part, à chaque instruction de branchement, la pile est vide. Cette transformation permet de rendre le procédé de vérification linéaire et d'éviter la forte consommation en mémoire volatile (RAM) que nécessite le stockage de registres pouvant accepter des données représentant différents types, c'est-à-dire les registres polymorphes.

Dans la méthode connue précitée, le bytecode Java ainsi modifié est utilisé pour l'exécution du programme après vérification. L'exécution du code modifié peut d'une part avoir des conséquences sur la fiabilité de l'exécution, d'autre part elle limite les possibilités d'utiliser les techniques d'optimisation connues du bytecode Java, utilisées par exemple pour réduire le temps d'exécution ou le temps de communication avec le système externe.

Dans la présente invention, le code intermédiaire (bytecode) original ainsi que le composant de réallocation est chargé dans le microcircuit à ressources limitées. Le code intermédiaire original est stocké en mémoire du microcircuit, par exemple dans une mémoire persistante accessible en écriture et en lecture de type EEPROM et le composant de réallocation est chargé dans une mémoire volatile (RAM) du microcircuit. Après chargement, le composant de réallocation est vérifié (étape 110) et, en cas de succès, l'on procède à la construction du code réalloué (étape 112) et finalement à une étape de vérification du code réalloué (étape 114) avant l'installation du code intermédiaire original stocké dans la mémoire persistante (étape 116) pour exécution. En cas d'échec du procédé de vérification du composant de réallocation ou du procédé de vérification du code réalloué, le code intermédiaire est rejeté et n'est pas installé pour exécution. Il est à remarquer que la construction du code réalloué peut être effectuée lors du procédé de vérification du composant de réallocation, c'est-à-dire que les étapes 110 et 112 peuvent être confondues.

La procédure de vérification du composant de réallocation sera décrite plus en détail ci-après, en faisant référence aux Figures 2 à 9:

La Fig. 2 montre, de manière simplifiée, une série d'instructions PC du code intermédiaire ainsi qu'un composant de réallocation T du registre réel de données de type. Les instructions du code intermédiaire peuvent être classées parmi les cinq classes d'instructions suivantes en fonction de leur effet sur la réallocation du registre de données de type correspondant.

| | |
|---|---|
| *"def x*" : | On définit la valeur de la variable *x* dans le registre (par exemple les instructions "sstore", *"astore"*) |
| *"use x"* : | On utilise la variable x dans le registre (par exemple les instructions *"sload", "aload"*) |
| "*nop"* : | On n'effectue aucune opération sur les valeurs du registre (par exemple les instructions *"sxor", "iadd"*) |
| *"return"*: | On sort de la méthode (par exemple les instructions "*areturn*", *"sreturn"*) |
| *"brch x y* : | On branche à des instructions cibles *x* ou *y* (par exemple les instructions "*ifeq*", "*if*-*scmpeq")* |

Faisant référence plus particulièrement aux Figures 2 et 3, le composant de réallocation T comprend un sous-tableau D contenant la réallocation pour chaque instruction qui définit le type d'une variable x dans le registre *rₓ,* c'est-à-dire une instruction de la classe *"def x",* et un tableau de réallocation F ayant le même nombre de colonnes *k* que de registres réels et le même nombre de lignes *S* que d'instructions PC. Le tableau F est un tableau résultant de la réallocation des registres réels de données de type *rₓ* à des registres virtuels *v_{y}.* Chaque registre *rₓ* de même type est réalloué à un seul registre virtuel *v_{y}* correspondant à ce type. Les registres réels dont le type peut changer, c'est-à-dire les registres polymorphes, sont réalloués à différents registres virtuels correspondants aux différents types de ces registres. Comme chaque registre virtuel ne définit qu'un seul type, les registres virtuels sont monomorphes, c'est-à-dire les variables pour lesquelles il existe un type restent valables tout au long du procédé de vérification du code intermédiaire.

L'algorithme de vérification est beaucoup plus simple dans le cas des variables monomorphes, du fait qu'il convient simplement de trouver pour chaque variable le type de la variable qui sera valable tout au long de la procédure de vérification. Il s'agit en fait d'un calcul de point fixe où le type des variables est spécialisé jusqu'à ce qu'il reste inchangé. Un tel algorithme échoue si on lui présente des variables polymorphes comme étant des variables monomorphes.

Le procédé de vérification du composant de réallocation utilise un tableau courant F' (voir Fig. 3) contenant le type de chaque variable pour l'instruction (PC) courante, de sorte que les types contenus dans ce tableau courant F' correspondent à l'évolution de la réallocation courante lors de la vérification du composant de réallocation *T*. Le tableau courant F' peut donc être représenté par une seule ligne et un nombre de colonnes égal au nombre *k* de registres réels.

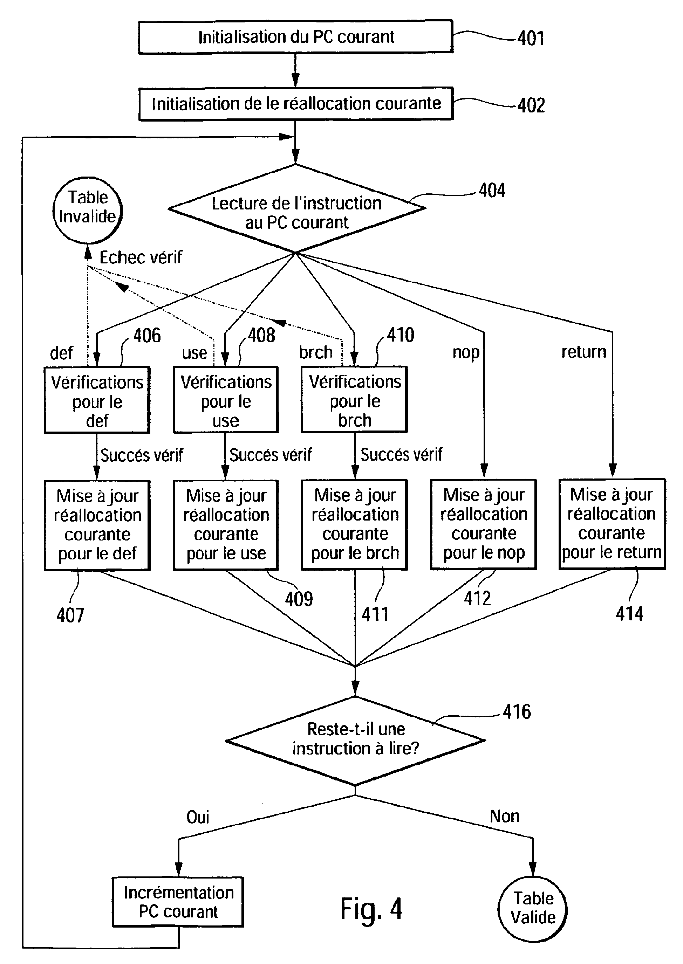

Au début du procédé de vérification, c'est-à-dire à l'instruction PC₁, les données du tableau de réallocation courante sont initialisées (étape 402 de la Fig. 4) avec le type *"nul",* telles que montrées dans la Fig. 3, qui est le plus petit élément du treillis des types, au lieu du type *"top"* qui réunit tous les types, c'est-à-dire le plus grand élément du treillis des types. On lit ensuite la première instruction (étape 404 de la Fig. 4) et en fonction de la classe d'instruction du code intermédiaire, l'on effectue une vérification suivie par une mise à jour du tableau de réallocation courante F' ou simplement une mise à jour du tableau de réallocation courante.

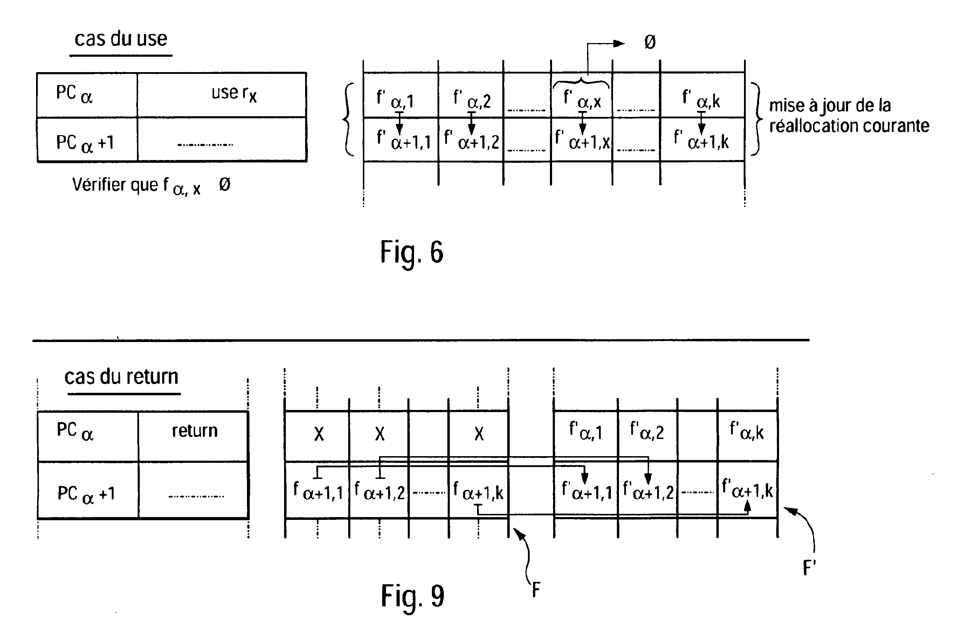

Pour les instructions sans opération sur le registre *"nop"* et de retour *"return",* l'algorithme de vérification effectue simplement une mise à jour du tableau de réallocation (étapes 412 respectivement 414 de la Fig. 4), telle que montrée dans les Figures 8 respectivement 9. Dans le cas d'une instruction de type *"nop",* la mise à jour consiste simplement en un report des données de type (f'_{α}, ᵢ) dans le tableau de réallocation courante, c'est-à-dire que les données de type sont conservées sans changement pour la prochaine instruction PC ₊₁. Dans le cas d'une instruction de classe *"return",* la mise à jour consiste en l'affectation des données de type (f'_{α+1,i}) du sous-tableau de réallocation F de l'instruction suivante PC₊₁ dans le tableau de réallocation courante F', telle que montrée dans la Fig. 9.

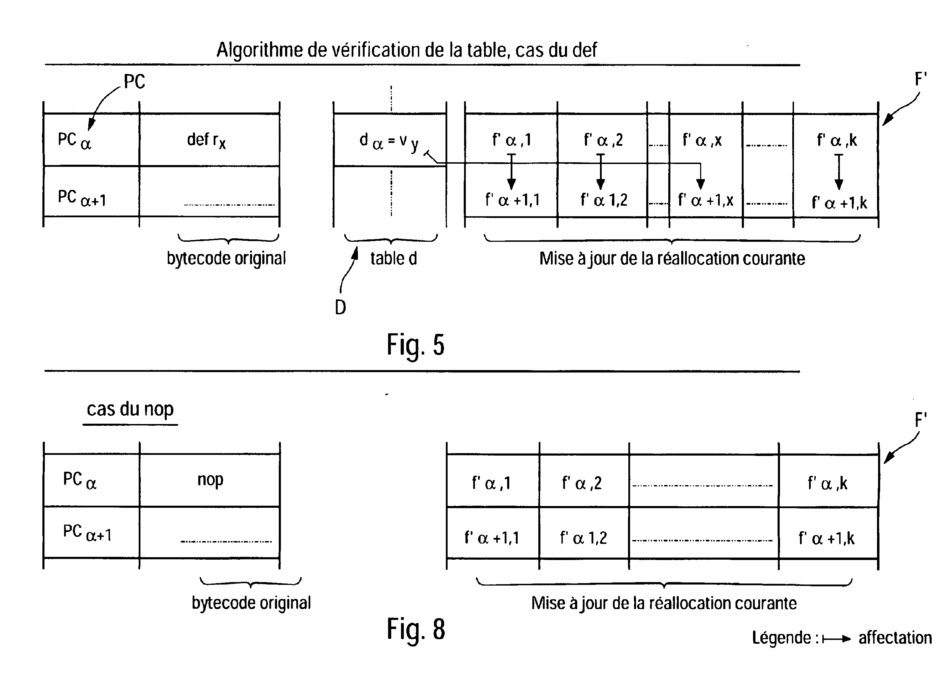

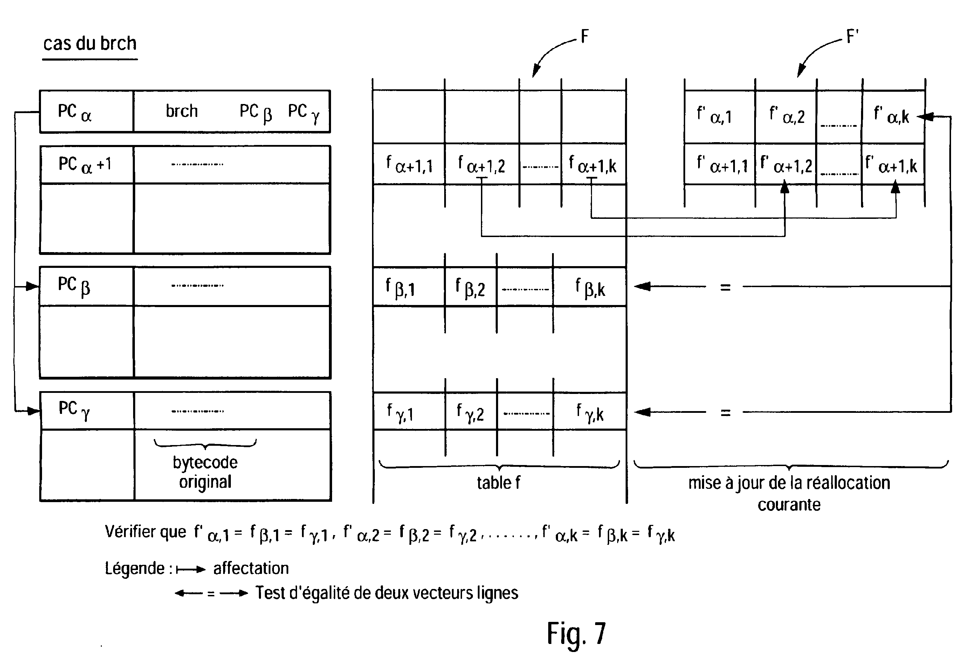

Dans le cas d'une instruction de définition "def", l'on affecte les données de type (*d_{α}*) dans le sous-tableau D contenant la réallocation pour l'instruction (PC) en question, au registre correspondant du tableau de réallocation courante F', c'est-à-dire si l'instruction courante *PC* définit la valeur d'un registre (*f*,*ₓ*) la réallocation *(d_{α}*=*v_{y})* définie dans le tableau D est affectée et met à jour le registre (*f*' ,*ₓ*) du tableau de réallocation courante F'. Lors de cette mise à jour, les autres valeurs (*f*' ,*ᵢ* à *f*' ,*ₓ₋₁* et *f*' ,*ₓ₊₁* à *f*',*ₖ*) du tableau de réallocation courante sont conservées, telles que montrées dans la Fig. 5.

Si l'instruction est de classe *"use rₓ"*, l'algorithme de vérification vérifie simplement si la valeur du registre correspondant (la colonne *x*) du tableau de réallocation courante F' n'est pas égale à la valeur *"nul",* qui est la plus petite valeur du treillis des types. La mise à jour pour cette instruction est simplement la conservation des données de type (*f*' , *ᵢ*) du tableau de réallocation courante F', telle que montrée à la Fig. 6.

Dans le cas d'une instruction de branchement, la vérification consiste à comparer les données de type (*f' ᵢ*) dans le tableau dans le tableau de réallocation courante F' correspondant à l'instruction courante PC_{α} avec les données de type (*f*',*ᵢ*) du tableau de réallocation F aux instructions cibles PC_{β} et PC_{γ} et, en cas d'inégalité, la procédure de vérification se termine avec un échec. Le tableau de réallocation courante F' est ensuite mis à jour en affectant les données de type du tableau de réallocation F à l'instruction suivante PC_{α+1} au tableau de réallocation courante F'.

La prochaine étape (416) consiste à vérifier s'il reste encore des instructions à lire et, dans l'affirmative, d'incrémenter le pointeur de l'instruction courante (étape 418) et de répéter la boucle de lecture de l'instruction (étape 414) et de vérification et de mise à jour de la réallocation courante jusqu'à ce qu'il n'y ait plus d'instructions à lire. Le programme de vérification passe ensuite à l'étape de construction du code réalloué (étape 112) et à la vérification du code réalloué (étape 114). La vérification du code réalloué suit les procédés de vérification connus. Il est toutefois à remarquer que le code réalloué peut être construit lors de la vérification du composant de réallocation (étape 110) en changeant la variable sur laquelle agit l'instruction à sa valeur réallouée. Par exemple, si une instruction de définition *"def r₁*" (voir Fig. 3) agit sur le registre *r₁* qui est réalloué au registre virtuel *v₁,* alors l'instruction du code réalloué devient *"def v₁",* de sorte qu'elle agit sur le registre virtuel de données de type au lieu du registre réel de données de type original.

On constate donc que les instructions sont lues linéairement de la première à la dernière instruction, chaque instruction étant exécutée par l'interpréteur de type.

Pour les instructions d'utilisation d'une variable ("*use*"), sans opération sur les registres ("*nop*") ou de retour ("*return*"), le comportement de l'algorithme de vérification est similaire à celui d'un vérifieur conventionnel.

Cependant on doit garantir lors d'une instruction d'utilisation *"use x"* que la variable "*x*" sur laquelle agit cette instruction a été bien définie auparavant, alors que la variable peut avoir été initialisée dans une autre branche du programme avant cette instruction. Ce problème est résolu en vérifiant que la valeur stockée dans le sous-tableau D pour une instruction de définition *"def x"* spécialise le type précédent de la variable x dans le tableau de réallocation courante F'. Pour cette raison il est important qu'au début du programme, les variables du tableau F' sont initialisées à *"nul"* pour leur permettre d'être spécialisées.

On remarque que sur une instruction de branchement *"brch",* l'algorithme de vérification n'effectue aucun changement au tableau de réallocation courante F' et avance d'une instruction.

Une fois arrivé à la fin du code intermédiaire, le programme recommence au début jusqu'à ce que le type de chaque variable reste inchangé. L'algorithme de vérification échoue quand on lui présente un code avec des variables non monomorphes, car il vérifie sur les instructions de définition "*def*" que les données de type dans le sous-tableau D spécialisent le type déjà présent dans le tableau de réallocation courante F'. Un code qui passe la vérification monomorphe et initialise les données de type de ses variables doit être correctement typé, puisque chaque registre virtuel (*vᵢ*) ne peut contenir qu'un seul type. En d'autres mots, l'interpréteur de types vérifie que toutes les utilisations possibles d'une variable sont conformes avec son type et ceci est donc assuré par le fait que les opérations des instructions PC sur le tableau de réallocation F passent une vérification monomorphe.

Une réallocation est valide si dans le code intermédiaire original, toute instruction d'utilisation *"use x*" utilise la même réallocation que toutes les instructions de définition *"def* x" qui ont pu la définir. C'est à dire que dans le code généré pour la vérification, si une instruction *"use* x" s'est transformée en *"use y",* alors l'instruction *"def* x" s'est transformée en *"def y*".

La validité de la proposition précédente peut être démontrée par un raisonnement par l'absurde. Soit une réallocation non valide pour laquelle l'algorithme se termine sur la fin du code. Si la réallocation n'est pas valide, il existe alors une instruction *"use* x" dans le champ d'une instruction *"def x"* pour laquelle la réallocation de la variable x est la variable z, alors que la réallocation de la variable x pour l'instruction *"def x*" est la variable y, où la variable y est différente de la variable z. Il existe une séquence d'instructions du code intermédiaire original *"def* x", *"i-1", "i-2",* ...," *i-k",* "*use x*" qui conduit de l'instruction *"def x*" à *"use x*" par un flot d'exécutions correctes. Il n'y a pas d'autre instruction *"def x*" à l'intérieur de la séquence, sinon ce serait elle qui définit l'instruction "use x". Toutes les autres instructions préservent la réallocation courante du registre x lors du déroulement de l'algorithme. En effet, les instructions *"nop", "return"* et "*use*" ne changent pas la réallocation courante et l'instruction de branchement *"brch"* s'assure que la réallocation après le branchement est la même que celle avant.

La séquence d'instructions précitée est donc en contradiction avec la proposition par l'absurde, ce qui démontre la validité de la proposition initiale, objet de la démonstration.

On peut également démontrer par le raisonnement suivant que si un code intermédiaire, généré à partir d'un code intermédiaire original et de son tableau de réallocation valide, passe un procédé de vérification, alors le code intermédiaire original passe aussi le procédé de vérification. Supposons que dans le procédé de vérification du code intermédiaire on stocke en mémoire volatile (RAM) les types des variables pour chaque cible de branchement ainsi qu'un tableau courant et une liste de travail. Les tableaux sont initialisés avec le type *"top",* le plus grand élément du treillis des types. Le tableau courant est également initialisé avec le type "top" pour chaque variable non paramétrée et avec les types de la signature pour les variables paramétrées. L'algorithme de vérification commence avec l'instruction associée au point d'entrée de la méthode dans la liste de travail. On enlève la première instruction de la liste de travail. On calcule le nouveau tableau courant après l'exécution de cette instruction à partir de l'interpréteur de type et on l'unifie à tous les tableaux qui correspondent aux instructions qui peuvent succéder. On rajoute à la table de travail les instructions dont les tableaux ont changé. Le code intermédiaire est vérifié avec succès si l'on aboutit à une liste de travail vide. Le procédé de vérification rejet un algorithme si une unification de types est impossible ou si l'interpréteur de types rencontre une instruction incompatible avec les données de type dans le tableau des registres.

En prenant une étape quelconque de la vérification du code intermédiaire original, l'on a comme hypothèse que la vérification s'est bien déroulée jusqu'à présent, en on a à disposition le tableau courant et le contenu des registres. On part aussi de l'hypothèse que l'étape correspondante de la vérification du code intermédiaire avec réallocation se déroule bien et on sait que la réallocation est valide. Pour terminer cette démonstration, on distingue plusieurs cas selon l'instruction en cours :

| | |
|---|---|
| "*nop*" : | L'instruction ne concerne pas les variables, on avance à l'instruction suivante sans rien modifier. Le procédé de vérification ne peut pas échouer sur une instruction "*nop*". |
| *"def x*" : | Mise à jour du tableau courant avec le nouveau type. Le procédé de vérification ne peut pas échouer sur un *"def"* car il prend un argument dans la pile, mais on n'est pas concerné par les types dans la pile. |
| *"return"* : | La vérification se poursuit normalement. Le procédé de vérification ne peut pas échouer ici. |
| *"use x"* : | Le procédé de vérification peut échouer si l'interpréteur de type décide que le type de la variable x n'est pas compatible avec son utilisation. La validité de la réallocation nous assure que la réallocation de la variable x n'a pas changé entre cette instruction "use" et les instructions "*def*" qui lui correspondent. Comme la vérification du code réalloué a réussi jusqu'ici, le type de la variable x est compatible avec son utilisation. Donc, le procédé de vérification passe avec succès sur l'instruction. |
| *"brch x y"* : | Le procédé de vérification peut échouer dans l'unification du tableau courant avec celui correspondant au registre *x* ou avec celui correspondant au registre *y*. Or, la validité de la réallocation nous assure que la réallocation courante au moment de l'instruction de branchement *"brch"* est la même que celle en *x* et en *y*. De plus, la vérification du code réalloué réussit pour cette instruction, la vérification réussit donc aussi pour le code intermédiaire non réalloué. |

En ce qui concerne le traitement des exceptions dans le code intermédiaire, si l'on se trouve sur une partie de code protégée par un "handler" d'exception, chaque instruction doit être considérée comme un branchement potentiel vers la portion de code intermédiaire qui traite l'exception, c'est à dire que la réallocation courante doit être la même que celle donnée dans le tableau de réallocation de l'exception. Si ce traitement des exceptions permet d'assurer la correction du typage, il est par contre trop restrictif dans le sens où il ne permet pas de changer la réallocation d'une variable à l'intérieur d'un bloc protégé par un même handler d'exception. Exemple :

| | |
|---|---|
| PC 1 : | *def r₁* comme entier: réallocation *r₁ → v₁* |
| PC 2 : | *def r₁* comme référence: réallocation *r₁ → v₂* |

Si les deux instructions "*def*" sont protégées par le même "handler" d'exception et que la variable *r₁* n'est pas utilisée dans le traitement de l'exception, alors le typage est respecté, mais l'algorithme de vérification du tableau de réallocation échoue car la variable r₁ ne peut avoir qu'une seule réallocation à l'entrée du traitement de l'exception. La solution est de créer un registre factice (appelons le Top) qui interdit l'utilisation du registre réel réalloué en Top. Dans l'exemple, il suffit de réallouer à Top le registre *r₁* dans le tableau de réallocation du traitement de l'exception. Une réallocation à Top se transmet par les branchements et peut apparaître dans un tableau de réallocation qui correspond au début du traitement d'une exception.

En ce qui concerne les appels de sous-routines, on doit tenir compte du fait qu'elles font perdre le lien entre les instructions "*use*" et les instructions "*def*" des variables. Pour rendre compatible les réallocations avec les appels de sous-routines JSR/RET, il faut ajouter un système de contexte de réallocation.

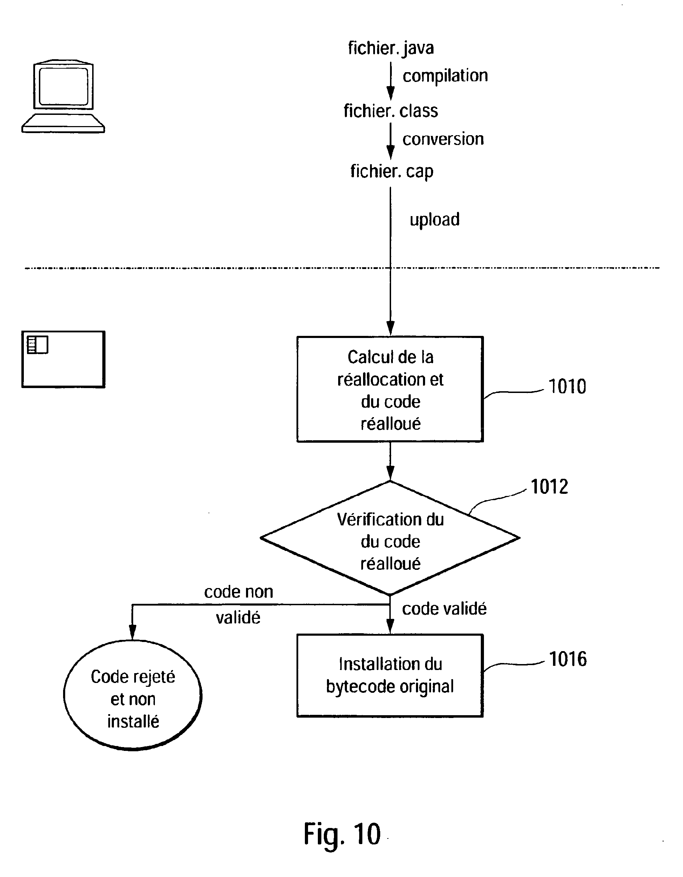

En faisant référence à la Fig. 10, dans une deuxième forme d'exécution de l'invention, le calcul de la réallocation et du code réalloué (étape 1010) est effectué entièrement dans le microcircuit à ressources limitées, suivi d'une étape 1012 de vérification du code réalloué dans le microcircuit et, en cas de succès, l'installation du code intermédiaire original pour exécution (étape 1016). Le calcul de la réallocation et du code réalloué dans le microcircuit peut être effectué selon les méthodes connues, toutefois sans qu'il soit nécessaire d'effectuer une optimisation du code réalloué du fait qu'il n'est pas utilisé pour l'exécution, mais uniquement pour la vérification de l'intégrité et de l'innocuité du code intermédiaire.

Le code intermédiaire peut soit être stocké en mémoire persistante accessible en écriture et en lecture, par exemple de type EEPROM, lors du premier chargement depuis le système externe, soit être réinstallé après vérification, en appliquant une fonction de hachage au premier chargement, en stockant le résultant dans une mémoire du microcircuit et en le comparant avec la valeur de hachage calculée à partir du code intermédiaire chargé après vérification.

## Revendications

1. Procédé de vérification de code intermédiaire exécutable par un microcircuit à ressources limitées connecté à un système de traitement de données externe, comportant une étape de modification du code intermédiaire comprenant la réallocation des registres réels de type (*r*) à des registres virtuels (*v*) de type monomorphe, et de construction d'un code réalloué dont les instructions (PC) font référence aux registres virtuels (*v*), et une étape de vérification du code réalloué dans le microcircuit à ressources limitées, **caractérisé en ce que**, en cas de succès de la vérification du code réalloué dans le microcircuit, l'on installe le code intermédiaire original dans le microcircuit à ressources limitées pour exécution.

2. Procédé selon la revendication 1, **caractérisé en ce que** l'étape de la construction du code réalloué est effectuée dans le microcircuit à ressources limitées.

3. Procédé selon l'une des revendications précédentes, **caractérisé en ce que** le code intermédiaire original est chargé dans le microcircuit à ressources limitées avant l'exécution du procédé de vérification et stocké dans une mémoire du microcircuit.

4. Procédé selon l'une des revendications précédentes, **caractérisé en ce que**, dans l'étape de modification du code intermédiaire, l'on crée un composant de réallocation (T) incluant un tableau de réallocation définissant la réallocation des données du type d'un registre réel à des données du type d'un registre virtuel monomorphe.

5. Procédé selon la revendication précédente, **caractérisé en ce que** le composant de réallocation (T) contient un sous-tableau de réallocation (D) contenant la réallocation pour chaque instruction de définition ("*def*") du code intermédiaire définissant le type d'une variable dans un des registres réels, et un tableau de réallocation (F) contenant la réallocation des registres réels de type aux registres virtuels monomorphes.

6. Procédé selon la revendication précédente, **caractérisé en ce que** ledit procédé comporte une étape supplémentaire de vérification du composant de réallocation (T) et qu'au cours de cette étape supplémentaire l'on vérifie si le sous-tableau de réallocation (D) pour les instructions de définition ("*def*") comporte une valeur de réallocation et, s'il ne comporte pas de valeur de réallocation, le code intermédiaire est rejeté.

7. Procédé selon la revendication 6, **caractérisé en ce que** la vérification du composant de réallocation (T) utilise un tableau de réallocation courante (F'.) qui contient le type de chaque variable pour l'instruction (PC) courante, ladite vérification du composant de réallocation (T), dans le cas d'une instruction du code intermédiaire qui utilise une variable, consiste à vérifier si la variable utilisée dans le tableau de réallocation courante (F') n'est pas "nul" et, si elle est "*nul*", le code intermédiaire est rejeté.

8. Procédé selon la revendication 6, **caractérisé en ce que** la vérification du composant de réallocation (T) utilise un tableau de réallocation courante (F') qui contient le type de chaque variable pour l'instruction (PC) courante, ladite vérification du composant de réallocation (T), dans le cas d'une instruction de branchement (PC_{α}) à des instructions cibles (PC_{β}, PC_{γ}), consiste à vérifier si les données de type (f'_{α},1) dans le tableau de réallocation courante (F') correspondant à l'instruction courante (PC_{α}) sont égales aux données de type (f_{β}, 1 ; f_{γ}, 1) du tableau de réallocation (F) correspondant aux instructions cibles (PC_{β}, PC_{γ}) et, en cas de différences, le code intermédiaire est rejeté.

9. Procédé selon l'une des revendications 1 à 3, **caractérisé en ce que** l'étape de modification du code intermédiaire est effectuée dans le microcircuit à ressources limitées.

## Claims

1. A method for verifying an intermediate code executable by a microcircuit that has limited resources and that is connected to an external data-processing system, said method comprising a modification step for modifying the intermediate code, which step consists in reallocating type real registers (r) to monomorphic type virtual registers (v), and in constructing a reallocated code whose instructions (PC) refer to the virtual registers (v), and a verification step for verifying the reallocated code in the microcircuit having limited resources, said method being **characterized in that**, if the verification of the reallocated code in the microcircuit is successful, the original intermediate code is installed in the limited-resource microcircuit for execution.

2. A method according to claim 1, **characterized in that** the step consisting in constructing the reallocated code is performed in the limited-resource microcircuit.

3. A method according to either preceding claim, **characterised in that** the original intermediate code is loaded into the limited-resource microcircuit prior to the execution of the method for verification, and is stored in a memory of the microcircuit.

4. A method according to any preceding claim, **characterized in that**, in the step consisting in modifying the intermediate code, a reallocation component (T) is created that includes a reallocation table defining the reallocation of the data of the type of a real register to data of the type of a monomorphic virtual register.

5. A method according to the preceding claim, **characterized in that** the reallocation component (T) contains a reallocation sub-table (D) containing the reallocation for each definition instruction ("def") of the intermediate code that defines the type of a variable in one of the real registers, and a reallocation table (F) containing the reallocation of the type real registers to the monomorphic virtual registers.

6. A method according to the preceding claim, **characterised in that** said method further comprises an additional step for verifying the reallocation component (T), and **in that** said additional step consists in verifying whether the reallocation sub-table (D) for the definition instructions ("def") includes a reallocation value and, if it does not include a reallocation value, the intermediate code is rejected.

7. A method according to claim 6, **characterized in that** the verification of the reallocation component (T) uses a current reallocation table (F') that contains the type of each variable for the current instruction (PC), maid verification of the reallocation component (T), for an instruction of the intermediate code that uses a variable, consisting in verifying whether the variable used in the current reallocation table (F') is not "zero" and, if it is "zero", the intermediate code is rejected.

8. A method according to claim 6, **characterized in that** the verification of the reallocation component (T) uses a current reallocation table (F') that contains the type of each variable for the current instruction (PC), said verification of the reallocation component (T), for a branch instruction (PC_{α}) for branching to target instructions (PC_{β}, PC_{γ}), consists in verifying whether the items of type data (f'_{α},1) in the current reallocation table (F') corresponding to the current instruction (PC_{α}) are equal to the items of type data (f_{β}, 1; f_{γ}, 1) of the reallocation table (F) corresponding to the target instructions (PC_{β}, PC_{γ}) and, if the items of data are different, the intermediate code is rejected.

9. A method according to any one of claims 1 to 3, **characterized in that** the modification step for modifying the intermediate code is performed in the limited-resource microcircuit.

## Patentansprüche

1. Prüfverfahren eines Zwischencodes, ausführbar von einer Mikroschaltung mit begrenzten Ressourcen, die an einem externen Datenverarbeitungssystem angeschlossen ist, umfassend einen Änderungsschritt des Zwischencodes bestehend aus der Neuzuweisung von reellen Registern des Typs (r) zu virtuellen Registern (v) des Typs monomorph und der Konstruktion eines neu zugewiesenen Codes, dessen Anweisungen (PC) sich auf die virtuellen Register (v) beziehen, und einen Prüfschritt des neu zugewiesenen Codes in der Mikroschaltung mit begrenzten Ressourcen, **dadurch gekennzeichnet, dass** man bei erfolgreicher Prüfung des neu zugewiesenen Codes in der Mikroschaltung einen Original-Zwischencode in die Mikroschaltung mit begrenzten Ressourcen für die Ausführung einfügt.

2. Verfahren gemäß Anspruch 1, **dadurch gekennzeichnet, dass** der Konstruktionsschritt des neu zugewiesenen Codes innerhalb der Mikroschaltung mit begrenzten Ressourcen erfolgt.

3. Verfahren gemäß einem der vorangehenden Ansprüche, **dadurch gekennzeichnet, dass** der Original-Zwischencode vor der Ausführung des Prüfverfahrens in die Mikroschaltung mit begrenzten Ressourcen geladen und in einem Speicher der Mikroschaltung abgelegt wird.

4. Verfahren gemäß einem der vorangehenden Ansprüche, **dadurch gekennzeichnet, dass** man bei dem Änderungssehritt des Zwischencodes eine Neuzuweisungskomponente (T) erstellt, die eine Neuzuweisungstabelle enthält, die die Neuzuweisung der Daten des Typs eines reellen Registers zu Daten des Typs eines monomorphen virtuellen Registers definiert.

5. Verfahren gemäß dem vorangehenden Anspruch, **dadurch gekennzeichnet, dass** die Neuzuweisungskomponente (T) eine Neuzuweisungs-Untertabelle (D) umfasst, die die Neuzuweisung für jede Definitionsanweisung ("def") des Zwischencodes enthält der den Typ einer Variablen in einem der reellen Register definiert, und eine Neuzuweisungstabelle (F), die die Neuzuweisung der reellen Register des Typs zu den monomorphen virtuellen Registern enthält.

6. Verfahren gemäß dem vorangehenden Anspruch, **dadurch gekennzeichnet, dass** das genannte Verfahren einen zusätzlichen Prüfschritt der Neuzuweisungskomponente (T) umfasst, und dass man im Verlauf dieses zusätzlichen Schritts prüft, ob die Neuzuweisungs-Untertabelle (D) für die Definitionsanweisungen ("def") einen Neuzuweisungswert enthält, und wenn sie keinen Neuzuweisungswert enthält, der Zwischencode abgelehnt wird.

7. Verfahren gemäß Anspruch 6, **dadurch gekennzeichnet, dass** die Prüfung der Neuzuweisungskomponente (T) eine laufende Neuzuweisungstabelle (F') verwendet, die den Typ jeder Variablen für die laufende Anweisung (PC) enthält, wobei die Prüfung der Neuzuweisungskomponente (T), im Fall einer Anweisung des eine Variable verwendenden Zwischencodes, in der Prüfung besteht, ob die in der laufenden Neuzuweisungstabelle (F') verwendete Variable nicht gleich "*null*" ist, und wenn sie gleich "*null*" ist, der Zwischencode abgelehnt wird.

8. Verfahren gemäß Anspruch 6, **dadurch gekennzeichnet, dass** die Prüfung der Neuzuweisungskomponente (T) eine laufende Neuzuweisungstabelle (F') verwendet, die den Typ jeder Variablen für die laufende Anweisung (PC) enthält, wobei die genannte Prüfung der Neuzuweisungskomponente (T), im Fall einer Anschlussanweisung (PC_{α}) an Zielanweisungen (PC_{β}, PC_{γ}), in der Prüfung besteht, ob die Daten des Typs (f'_{α},1) in der laufenden Neuzuweisungstabelle (F'), die der laufenden Anweisung (PC_{α}) entsprechen, mit den Daten des Typs (f_{β}, 1; f_{γ}, 1) der Neuzuweisungstabelle (F), die den Zielanweisungen (PC_{β}, PC_{γ}) entsprechen, übereinstimmen, und dass bei Unterschieden der Zwischencode abgelehnt wird.

9. Verfahren gemäß einem der Ansprüche 1 bis 3, **dadurch gekennzeichnet, dass** der Änderungsschritt des Zwischencodes innerhalb der Mikroschaltung mit begrenzten Ressourcen erfolgt.
